# EUROPEAN PATENT APPLICATION

(11) **EP 0 935 951 A2**
(43) Date of publication of application: **18.08.1999**
(21) Application number: 99102965.3
(22) Date of filing: 15.02.1999
(51) Int. Cl.: A61C 17/02

(54) **Water-jet device particulary for interdental cleaning**

(30) Priority: 16.02.1998 IT MI980282
(71) Applicant: Sodo, Diego, I-80126 Napoli (IT)
(72) Inventor: Sodo, Diego, 80100 Napoli (IT)
(74) Representative: Rapisardi, Mariacristina

(57) **Abstract**

A water-jet device particularly for interdental cleaning, comprising a water dispensing nozzle (2) which is associated with a flexible hose (3) which has, at the opposite end with respect to the nozzle, a connection means (4) for its direct hermetic association with the water mains of a room, and a cutoff means (5) for adjusting the flow-rate of the water to the nozzle.

## Description

The present invention relates to a water-jet device particularly for interdental cleaning.

It is known that plaque is a thin film which deposits on teeth and, if not removed daily, can cause severe problems such as tartar, gingivitis and tooth decay.

So-called electric toothbrushes and pulsating oral irrigators have currently been widely used to remove plaque.

Whilst electric toothbrushes are mainly suitable to remove plaque, pulsating oral irrigators are mainly suitable to remove food debris which can remain between the teeth and to simultaneously gently massage the gums.

However, the use of conventional pulsating oral irrigators always entails the use of electromechanical devices, such as pumps, switches and the like and, among other things, the presence of a reservoir from which the pump, when activated, draws the liquid (water or water and mouth-wash) to be sent to the spray nozzle so that it dispenses a jet of water whose intensity is adjusted beforehand according to the user's requirements.

From the above it is easily understood that conventional pulsating oral irrigators are complicated and expensive to manufacture, since they require many electromechanical components for their operation.

Furthermore, the high cost and considerable dimensions of conventional pulsating oral irrigators causes their use to be limited mainly to places where the user usually lives.

It is in fact practically impossible to take them to other locations for limited stays, both because it is necessary to have an electric supply mains always available and because of the space occupied by these devices during transport.

Especially this last drawback does not allow the user to use a pulsating oral irrigator after eating food in public or private places, such as offices, homes and the like other than the place where the pulsating oral irrigator is usually located.

The aim of the present invention is to eliminate the above described drawbacks of conventional pulsating oral irrigators.

Within the scope of this aim, an important object of the invention is to provide a water-jet device particularly for interdental cleaning which is very flexible in use, so that it can be used in any public or private place which has a water mains even if there is no electric system.

Another object of the invention is to provide a water-jet device which is simple to manufacture, so as to have a very modest cost which allows anyone to purchase and use it.

Another object of the invention is to provide a water-jet device which, in addition to being extremely simple and function and therefore free from operating drawbacks, can be used easily by adults and children without any problem.

Another object of the invention is to provide a water-jet device which requires no electrical connection for its operation, so that it can be used in any environment and country even in the presence of an electric system having a different voltage or of electric outlets having different standards.

Another object of the invention is to provide a water-jet device which does not require frequent interruptions for its operation owing to replenishment of the level of the cleaning liquid inside the reservoir, as instead occurs for conventional pulsating oral irrigators.

Another object of the invention is to provide a water-jet device which is not subjected to scale deposits which can alter or prevent is operation in the course of time, as instead occurs for conventional pulsating oral irrigators, and can be cleaned easily.

Another object of the invention is to provide a water-jet device which, despite having all the above advantages, has all the typical adjustments and functions of conventional pulsating oral irrigators.

This aim, these objects and others which will become apparent hereinafter are achieved by a water-jet device particularly for interdental cleaning, characterized in that it comprises a water dispensing nozzle which is associated with a flexible hose which has, at the opposite end with respect to the nozzle, a connection means for its direct hermetic association with the water mains of a room, and a cutoff means for adjusting the flow-rate of the water to the nozzle.

Further characteristics and advantages of the invention will become apparent from the description of a preferred but not exclusive embodiment of the device according to the invention, illustrated only by way of non-limitative example in the accompanying drawings, wherein:
Figure 1 is a perspective view of the water-jet device for interdental cleaning in its simplest embodiment;
Figure 2 is a perspective view of the device according to the invention, provided for example only with the water shunt member;
Figure 3 is a view of the device according to the invention, provided for example with the water shunt member and with the water pressure adjustment valve;
Figure 4 is a perspective view of how the device according to the invention can be arranged in a suitable support associated with a sanitary fitting;
Figure 5 is a view of how the device according to the invention can be associated directly with the body of a faucet according to the invention;
Figure 6 is a partially sectional lateral elevation view of a particular embodiment of the shunt member associated with the valve according to the invention;
Figure 7 is a perspective view illustrating the possibility to associate and detach the spray nozzle with respect to the flexible hose according to the invention;
Figure 8 is a perspective view, showing how the nozzle is provided with a closing or opening valve which can be operated manually to allow or prevent the flow of water;
Figure 9 is a schematic perspective exploded view of how water shunting or water pressure adjustment occurs inside the embodiment of Figure 6;
Figure 10 is a perspective view of a different embodiment of the second disk shown in Figure 9 according to the invention;
Figure 11 is a view of an example of a valve suitable to allow to automatically vary the pressure of the water to be dispensed by means of the spray nozzle according to the invention;
Figures 12 and 13 are partially sectional perspective exploded views of a different technical embodiment;
Figure 14 is a sectional view of a preferred embodiment of the device according to the invention;
Figures 15 and 16 are sectional views of the nozzle with the corresponding opening and closure system; and
Figures 17 and 18 are transverse sectional views of the closure member of the nozzle according to the invention.

With reference to the above described figures, the water-jet device particularly for interdental cleaning according to the invention, generally designated by the reference numeral 1, includes a water dispensing nozzle 2 which is hermetically associated with a flexible hose 3. The flexible hose 3 has, at the opposite end with respect to the one to which the nozzle 2 is connected, a connection means 4 which allows its direct hermetic association with the water mains of the room in which it is used.

The device is furthermore provided with a cutoff means, generally designated by the reference numeral 5, for adjusting the water flow-rate at the nozzle 2.

In particular, the cutoff means 5 can be formed by a means for adjusting the pressure of the water in order to vary its force when it leaves the nozzle 2.

The adjustment means can have, in one constructive embodiment, a valve which has a body 6 inside which there moves, in contrast with and by virtue of the action of an elastic means formed by a spring 7, a member 8 which is suitable to provide a seal with the inside of the body 6, so as to vary the aperture of the inlet 9 from which water flows into the body 2.

When the pressure of the water exceeds a preset value, the member 8 retracts, compressing the preadjusted spring 7 and thus partially or fully closing the filling inlet 9, so as to ensure the dispensing of water from the outlet 10 at the required pressure.

Advantageously, the valve further has a device for adjusting the setting of the spring 7, so as to allow to adjust the inlet pressure of the water in the body 6 and accordingly dispense water from the outlet 10 at the pressure required by the user, so that the jet that leaves the nozzle 2 is suitable for the user's requirements.

In particular, for example, the adjustment device can be simply a threaded knob 18 which is suitable to move a plate 19 to compress or release the preadjusted spring 7 in a preselected manner.

In a different embodiment, the valve includes at least one first disk 11, in which there is a hole 12 having a suitable diameter, substantially equivalent to the diameter of the flexible hose 3, and on which at least one second disk 13 is hermetically and rotatably superimposed; the second disk has a plurality of holes, the first one 14 of which has substantially the same diameter as the hole 12 of the first disk, whilst the remaining holes 15 have decreasing diameters.

While the first disk 11 is rigidly coupled to the body 16 in which it is accommodated and the hole 12 is coaxial to the outlet 17 on which the flexible hose 3 is fitted hermetically, the second disk 13 can rotate coaxially to the first disk 11 so as to allow to sequentially make the first hole 14 coincide with the hole 12 or make the remaining holes 15 coincide coaxially with the hole 12, according to the requirements.

In this manner one obtains, according to the setting performed in advance by the user, a choking of the water passages, so as to allow to dispense the water at the nozzle 2 at a preset pressure.

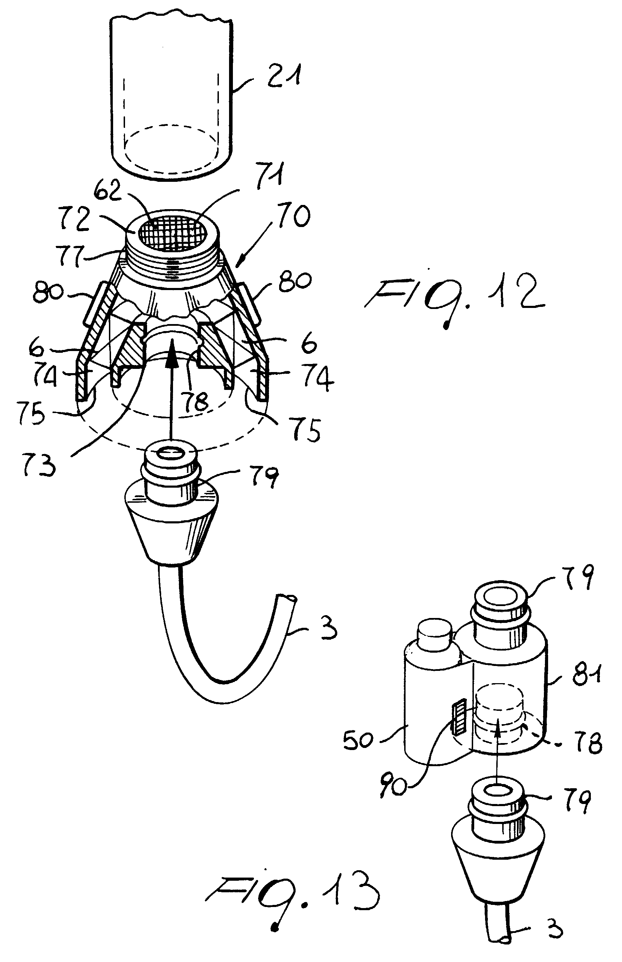

In another constructive variation, as shown in Figure 10, instead of the plurality of holes 14 and 15 it is possible, for example, to provide a semicircular slot 36 which, starting from a diameter which is substantially equal to the diameter of the hole 12, tends to taper at its end, so as to allow the same result as the holes having decreasing diameters.

The cutoff means 5 can also include a water shunt member 20 which is suitable to divert the water either into the flexible hose 3 or into a washbasin or other vessel when the device is associated with the water mains of a room and in particular, for example, with the body 21 of a faucet.

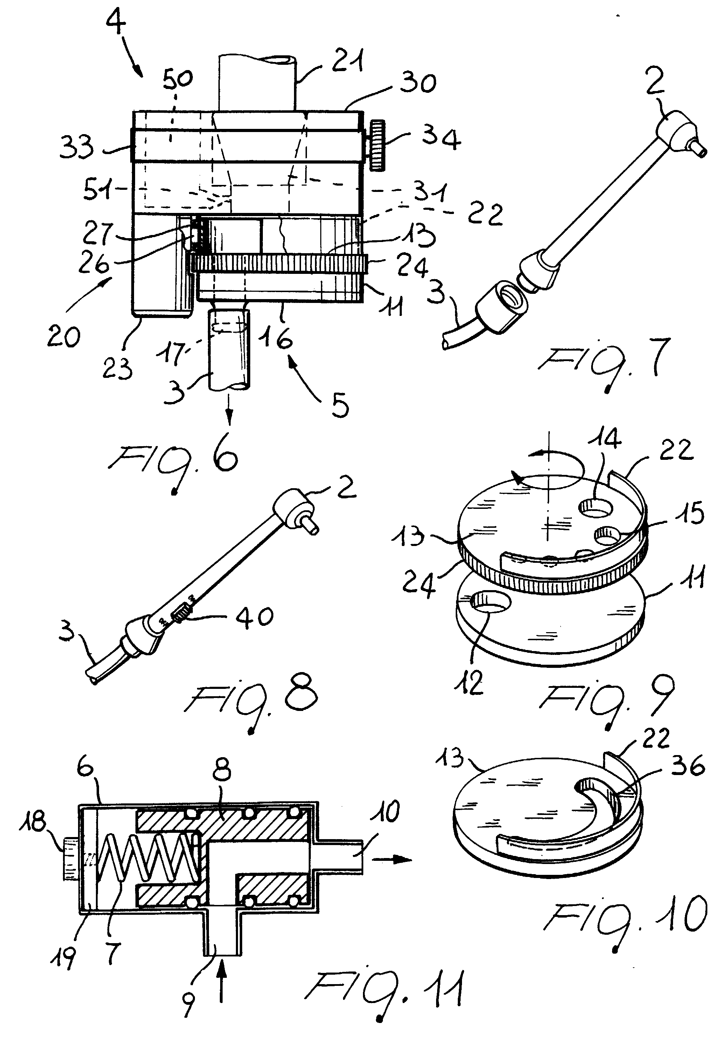

The shunt member can be separate with respect to the valve or, as shown in Figure 6, can be associated with it.

In the latter case, the shunt member includes at least one wall 22 which protrudes perimetrically from the second disk 13 in the region where the plurality of holes 14 and 15 is arranged.

In this manner, when the second disk 13 closes the hole 12 of the first disk 11, the water that arrives from the body of the faucet 21 automatically passes directly into the outlet 23 and from there into a washbasin or any other sanitary fitting or vessel used for this purpose.

In this solution, the water is prevented from passing into the flexible hose 3.

By manually turning the second disk 13 by virtue of the knurling 24, it is possible to arrange the hole 14, or one of the holes 15, coaxially to the hole 12 of the first disk 11 and therefore close the passage 26 hermetically, by virtue of the interposition of a gasket 27, and therefore allow water to enter the flexible hose 3, preventing it from flowing out of the outlet 23.

The connection means 4 can of course be any according to the requirements.

For example, it can be formed by a soft rubber sleeve 30 which has a frustum-shaped inlet 31 which is suitable to adapt to any type of outlet of the faucet 21 and can be fixed thereto for example by means of a strap 33 which can be tightened in a known manner by means of a ring or locking wheel 34.

In a simplified embodiment, the device according to the invention can be provided simply by virtue of the sleeve 30, the flexible hose 3 and the nozzle 2.

In this embodiment, the means for adjusting the pressure of the water in order to vary the force with which it exits from the nozzle 2 is constituted directly by the faucet provided at the end of a pipe of a room, such as the faucet of a bathtub, a washbasin, a bidet or the like.

In this case, the user merely has to adjust the flow-rate of the water according to his requirements, partly opening or closing the faucet so that the water delivered by the nozzle 2 has the chosen pressure.

Especially in the latter case, but also in the previously described cases, in order to prevent the escape of water from the nozzle 2 before it is placed in one's mouth, on the body of the nozzle 2 there is a closure or opening valve, for example a button 40 (see Figure 8), which is suitable to prevent the flow of water to the nozzle 2 when it is released but also to allow the water to flow once it has been pressed during use.

The device can further include a small reservoir 50 which is associated, for example, with the flexible hose 3 or included in the flexible part or sleeve 30 and is connected to the water that is dispensed from the nozzle 2.

This small reservoir can contain, for example, a product for the medical treatment of the mouth which, by virtue of the orifice 51, is drawn automatically and proportionally to the pressure with which the water is sent to the nozzle 2.

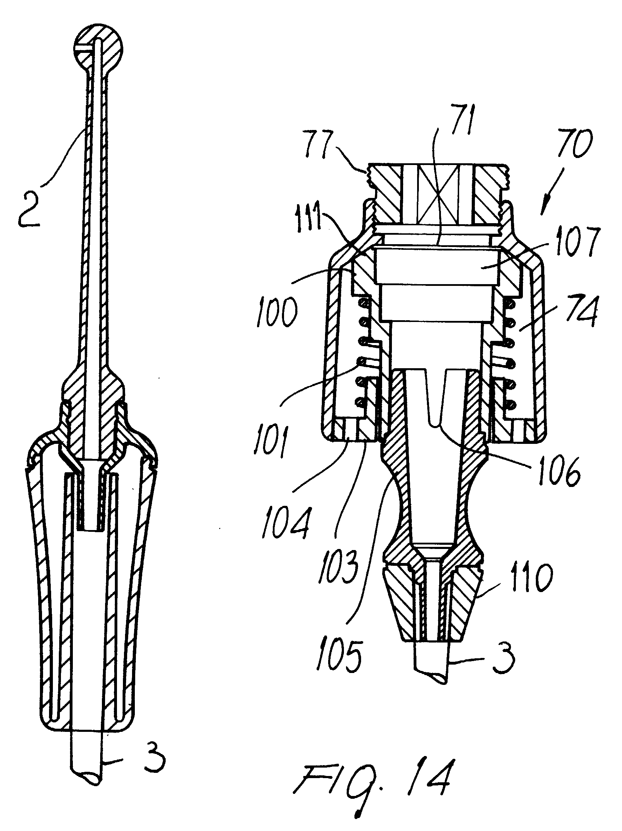

In a constructive variation, as shown in Figures 12 and 13, the adjustment means includes a connector 70 provided with a main duct 71 which has, at a first end 72 and at a second end 73, coupling means to directly hermetically associate it with the faucet 21 at one end and with the flexible hose 3 at the other end.

The connector 70 further has one or more secondary ducts 74, each of which accommodates the valve 6 in a more sophisticated constructive embodiment.

It is further possible to provide a jet breaking filter 62, as shown in Figure 12, and/or a limescale filter.

In this manner, when the pressure inside the connector 70 increases, the sealing member 8 tends to move in contrast with, and by virtue of the action of, the spring 7, so as to gradually increase the aperture of the inlet 9, allowing the excess water that has not passed through the flexible hose 3 to exit from the outlets 75, for example into a sink, optionally passing through a jet breaker filter, not shown, which is associated therewith to avoid undesirable water spraying.

In this embodiment, the connection means 4 has, at the first end 72 of the duct 71, a thread 77 for engaging a thread of the faucet and, at the second end, a seat 78 which is suitable to receive a bayonet coupling 79 which can be actuated by virtue of an actuation member 80.

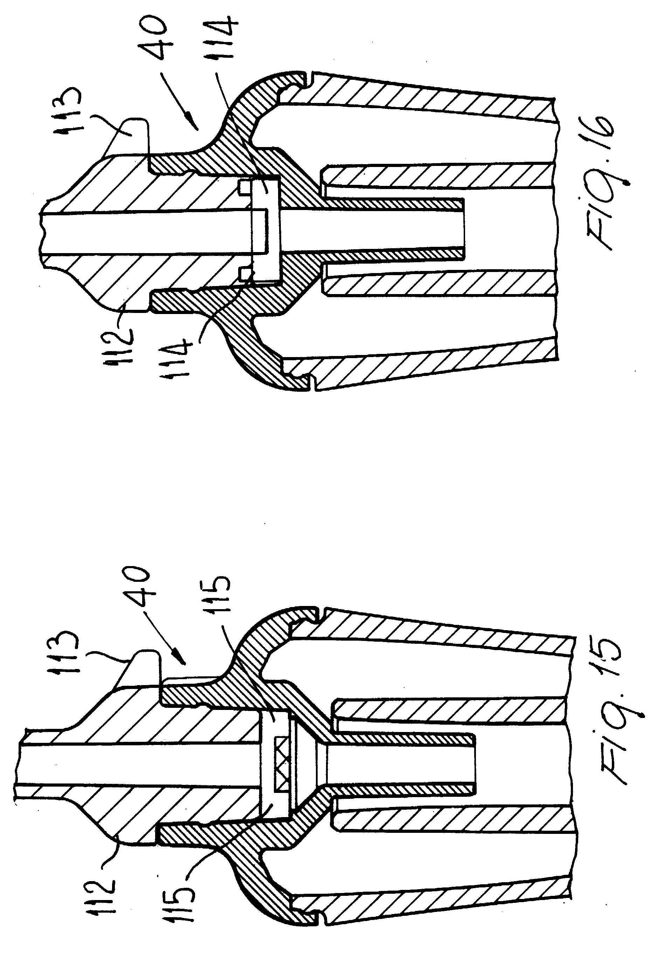

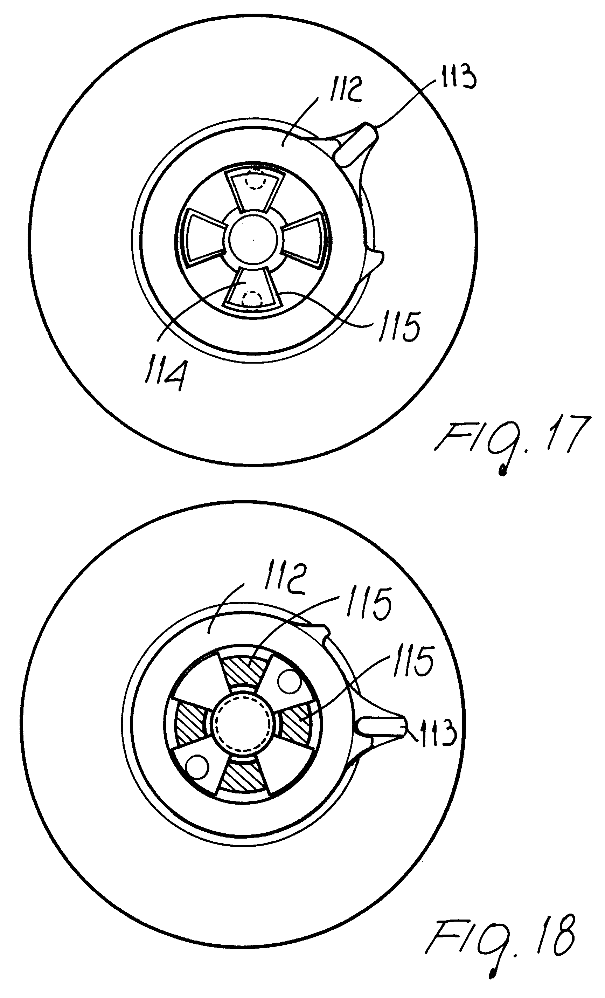

In another preferred embodiment, as shown in Figures 14, 15 and 16, the device according to the invention again has a connector 70 which has a main duct 71 and secondary ducts 74.

In this embodiment, the connector 70 is internally provided with a plug 100 which can move inside it in contrast with, and by virtue of the action of, an elastic means, particularly a preadjusted spring 101, from a first position for closing the secondary ducts 74 to a second position for opening them and vice versa.

The spring 101 is arranged coaxially and externally to the plug 100 and engages between the plug and a bottom 103 for closing the connector 70.

The bottom 103 is provided with openings 104 for discharging the water that passes through the secondary channels 74 when the plug is in the second open position, in which it compresses the spring 101.

The flexible hose 3 is further associated with the plug 100 by virtue of an engagement member 105.

The engagement member 105 is perimetrically provided with multiple notches 106 to allow its edge to have an elasticity which facilitates its hermetic insertion action in the plug 100.

The plug 100 is internally provided with chambers 107 whose diameter decreases toward the region for connection to the engagement member 105.

The jet breaker filter 62 is accommodated in one of the chambers.

The chambers 107 further produce a narrowing of the main duct 71 which determines, by cooperating with the jet breaker 62, a pressure increase which, if it exceeds preset values contrasted by the setting of the spring 101, is suitable to gradually move the plug 100, opening, again gradually, the secondary channels 74 in order to restore inside the main duct 71 the optimum pressure for discharging the water jet from the nozzle 2 for tooth cleaning.

The flexible hose 3 can be connected and retained to the engagement member 105 for example by means of a pin 110.

The head of the plug further has an inclined wall 111 which is suitable to hermetically engage a corresponding inclined wall provided on the connector 70 in order to improve the seal and to allow automatic centering of the two bodies.

The closure and opening valve 40 has, in this preferred embodiment, a closure member 112, as shown in Figures 17 and 18, which is activated by turning the nozzle 2 by means of the protrusion 113.

In the closure position, the walls 114 of the closure member 112 block the underlying openings 115, whilst in the open position they allow the water to exit from the openings 115.

If one wishes to use a medical product, the reservoir 50, provided with a regulator 90 for controlling the release of the medical product, is associated with a cartridge 81 which also has, at one end, the bayonet coupling 79 and can be associated in the seat 78 of the duct 71 and has, on the opposite end, another seat 78 which is suitable to receive the bayonet coupling 79 which is rigidly coupled to the flexible hose 3.

With this embodiment, the user merely has to screw the connector 70 to the faucet and when he needs to clean his teeth he simply associates the flexible hose with the faucet or interposes between the hose and the faucet the cartridge 81, which can directly contain the medical product, without accordingly requiring the reservoir 50.

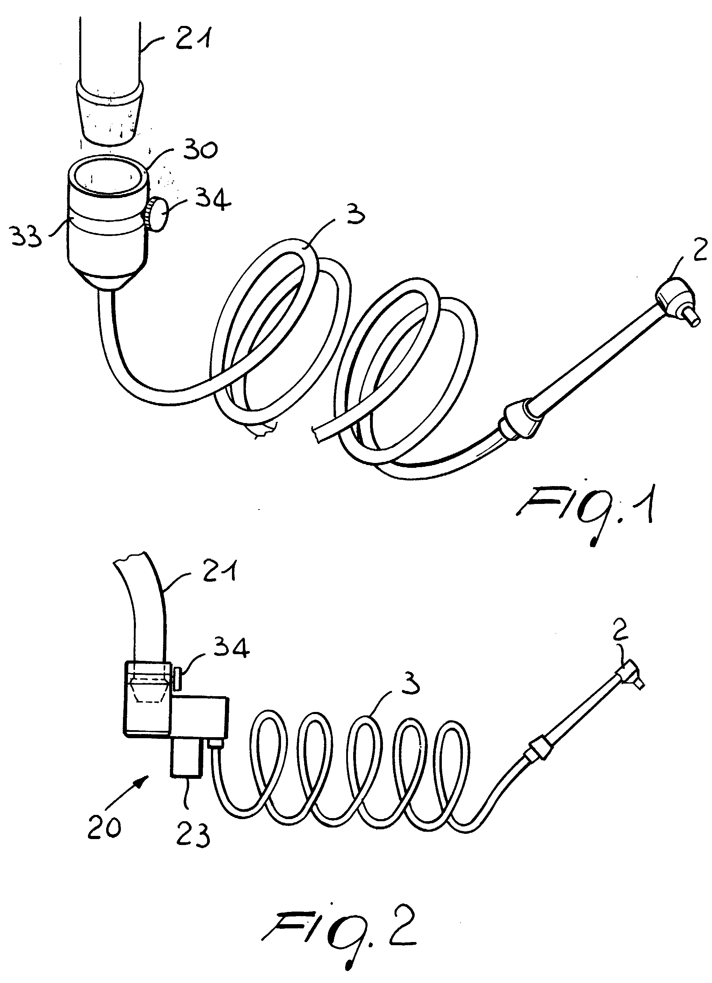

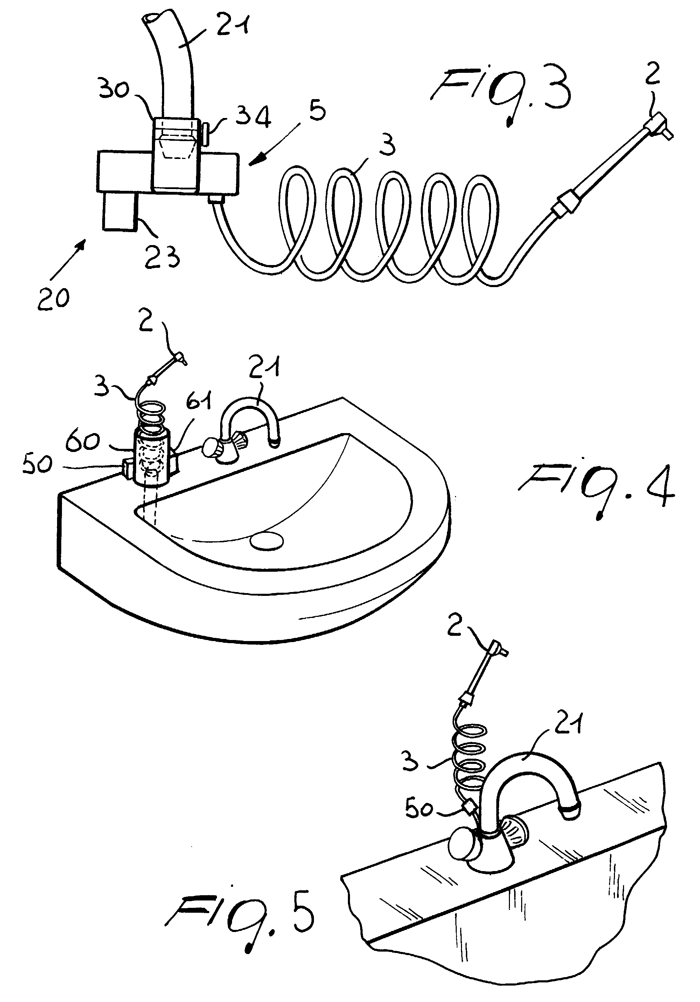

From the above description it is evident that the device according to the invention, as also shown schematically in Figures 1 to 5, can be constituted, starting from its simplest embodiment, merely by the sleeve 30, which is associated with the body 21 of a faucet, by the flexible hose 3 associated with the sleeve 30 and by the nozzle 2 associated with the opposite end of the flexible hose.

In this case, the pressure of the water is adjusted directly by the user by opening or closing the faucet.

In the other embodiments it can be noted that in addition to the already described basic components it is possible to associate a water shunt member, so as to be able to convey the water either into the flexible hose 3 and thus to the nozzle 2 or make it flow out for other uses as if it flowed directly out of the body of the faucet 21.

In addition to the shunt member or as a replacement thereof, it is further possible to provide the valve suitable to adjust the pressure of the water sent to the nozzle 2.

As clearly shown, the valve can be of the automatic type or can be adjusted manually.

The above description is related for example to a water-jet device particularly for interdental cleaning of the removable type, that is to say, of a type which can be easily transported and used whenever necessary in any room in which there is a water dispenser.

Among the advantages allowed by this solution, in addition to those already mentioned, attention is drawn to the fact that the device has no electromechanical devices, such as pumps and switches, has no water reservoir and requires no connection to the electric system of the room.

However, without losing in constructive simplicity, it is also possible to accommodate the flexible hose 3, the shunt member and the valve inside the body of the faucet.

In this case, the user merely has to activate the shunt member so as to convey the water from the outlet of the faucet into the flexible hose and then to the nozzle 2 in order to perform interdental cleaning.

In another constructive variation, the device according to the invention can be contained directly in a suitable support 60, which is associated or not with a sanitary fitting that is present in the room; in this case it has, in addition to the flexible hose 3, at least the valve, since the shunt member is no longer necessary because the support is directly connected to the water mains.

In this case, the valve can be directly set according to the pressure of the water mains provided in the room.

It is also possible to provide a manual pressure regulator 61 to obtain a water jet which is suitable for the requirements of the user.

In this case also, it is further possible to provide the reservoir 50.

The operation of the device according to the invention is already evident from the description and illustrations.

In particular, although the device is simple and has no electromechanical parts, it still allows the same adjustment options and the same functions as known types of pulsating oral irrigator.

The device can be further provided with all the necessary safety devices, such as for example those suitable to prevent its operation in case of an abnormal and dangerous increase in water pressure.

In practice it has been found that the device according to the invention is particularly advantageous owing to its constructive simplicity and most of call because it can be transported and used anywhere and for any requirement.

The device might in fact be available for example in hotels or restaurants, offices and the like, allowing anyone to perform gum massage and effective interdental cleaning at very low cost.

As an alternative, the device can of course be carried comfortably in one's pocket or baggage during trips or travels.

The invention thus conceived is susceptible of numerous modifications and variations, all of which are within the scope of the present inventive concept.

All the details may furthermore be replaced with other technically equivalent elements.

In practice, the materials used, as well as the dimensions, may be any according to the requirements and the state of the art.

## Claims

1. A water-jet device particularly for interdental cleaning, characterized in that it comprises a water dispensing nozzle (2) which is associated with a flexible hose (3) which has, at the opposite end with respect to said nozzle, a connection means (4) for its direct hermetic association with the water mains of a room, and a cutoff means (5) for adjusting the flow-rate of said water to said nozzle.

2. The device according to claim 1, characterized in that said cutoff means (5) comprises a means (6) for adjusting the pressure of said water to vary the force with which said water exits from said nozzle (2).

3. The device according to one or more of the preceding claims, characterized in that said cutoff means (5) comprises a shunt member (20) for said water in order to convey it or not toward said nozzle.

4. The device according to one or more of the preceding claims, characterized in that said shunt member (20) is associated with said connection means (4).

5. The device according to one or more of the preceding claims, characterized in that said adjustment means comprises at least one valve which has a body (6) inside which a member (8) for forming a seal with said body can move in contrast with, and by virtue of the action of, elastic means (7) in order to vary the aperture of the inlet (9) for said water inside said body.

6. The device according to one or more of the preceding claims, characterized in that said elastic means comprises at least one spring (7) which is preadjusted to preset values.

7. The device according to one or more of the preceding claims, characterized in that said valve has a device for adjusting the setting of said spring in order to adjust the pressure with which said water enters said body and accordingly adjust the pressure with which said water is delivered from said nozzle.

8. The device according to one or more of the preceding claims, characterized in that said valve comprises at least one first disk (11) which has a hole (12) on which at least one second disk (13) is rotatably superimposed, said second disk having a plurality of holes which decrease in diameter and being able to rotate so as to place said plurality of holes (14, 15) coaxially to said hole of said first disk.

9. The device according to one or more of the preceding claims, characterized in that said shunt member (20) is associated with said valve and comprises at least one wall (22) which protrudes perimetrically from said second disk (13) in the region where said plurality of holes is arranged.

10. The device according to one or more of the preceding claims, characterized in that said wall disengages from a passage for the discharge of said water when said second disk closes the hole of said first disk.

11. The device according to one or more of the preceding claims, characterized in that said adjustment means comprises a faucet (21) which is provided at the end of a pipe of said room.

12. The device according to one or more of the preceding claims, characterized in that said nozzle has, on its body, a closure or opening valve (40) which can be actuated manually to allow or prevent the delivery of water from it.

13. The device according to one or more of the preceding claims, characterized in that it comprises a reservoir (50) for containing a medical product for the mouth, which is connected to said flexible hose (3) in order to mix it with said water.

14. The device according to one or more of the preceding claims, characterized in that said adjustment means comprises a connector (70) which is provided with a main duct (71) which has, at a first end (72) and at a second end (73), said connection means for its direct hermetic association with said faucet at one end and to said flexible hose at the opposite end, and one or more secondary ducts (74), each of which accommodates a valve (6) which has a body inside which a member (8) can move in contrast with, and by virtue of the action of, an elastic means, said member forming a seal with said body and being movable in order to vary the aperture of an inlet (9) for feeding said water into said body as the pressure of said water varies.

15. The device according to one or more of the preceding claims, characterized in that said adjustment means comprises a connector (70) which has said main duct (71) and said secondary ducts (74) and a plug (100) which can move inside it, in contrast with, and by virtue of the action of, an elastic means, from a first position for closing said secondary ducts (74) to a second position for opening them and vice versa.

16. The device according to one or more of the preceding claims, characterized in that said plug comprises a closure bottom (103) which is provided with openings (104) to discharge the water that passes through said secondary channels (74) when said plug is in the second opening position.

17. The device according to one or more of the preceding claims, characterized in that it comprises an engagement member (105) for associating said flexible hose (3) with said plug, said engagement member (105) being perimetrically provided with multiple notches (106) in order to give its edge an elasticity which is suitable to facilitate its hermetic insertion in said plug (100).

18. The device according to one or more of the preceding claims, characterized in that said plug (100) is internally provided with chambers (107) whose diameter decreases toward the region for connection to said engagement member (105).

19. The device according to one or more of the preceding claims, characterized in that a jet breaker filter (62) is accommodated in at least one of said chambers.

20. The device according to one or more of the preceding claims, characterized in that the head of the plug has an inclined wall (111) which is suitable to hermetically engage a corresponding inclined wall provided on the connector (70).

21. The device according to one or more of the preceding claims, characterized in that said closure and opening valve (40) has a closure member (112) which is activated by turning the nozzle (2) by means of a protrusion (113), and in that the walls (114) of said closure member (112) block underlying openings (115) in said closure position and allow water to exit from said openings (115) in said open position.

22. The device according to one or more of the preceding claims, characterized in that said connection means has, on said first end of said duct, a thread (77) for its engagement with a thread of said faucet and, on said second end, a seat (78) which is suitable to receive a bayonet coupling which can be actuated by virtue of an actuation member.

23. The device according to one or more of the preceding claims, characterized in that said reservoir is associated with a cartridge (81) which has, at one end, said bayonet coupling which is associable in said seat of said duct and, on the opposite end, said seat suitable to receive said bayonet coupling of said flexible hose.

24. The device according to one or more of the preceding claims, characterized in that said connection means comprises a flexible member (30) which can be connected to the terminal water delivery part of the body of said faucet, said flexible member having means (34) for fastening to said faucet.

25. The device according to one or more of the preceding claims, characterized in that at least said flexible hose, said shunt member and said valve are accommodated inside the body of said faucet.

26. The device according to one or more of the preceding claims, characterized in that at least said flexible hose and said valve are accommodated in a support (60) which is associated with a sanitary fitting provided in said room.
